(19) Europäisches Patentamt
European Patent Office
Office européen des brevets

(11) EP 3 717 086 B1

(12) EUROPEAN PATENT SPECIFICATION

(45) Date of publication and mention of the grant of the patent:
**03.01.2024 Bulletin 2024/01**

(21) Application number: **18815136.9**

(22) Date of filing: **30.11.2018**

(51) International Patent Classification (IPC):
***A63H 33/04*** *(2006.01)* ***A63H 33/08*** *(2006.01)*

(52) Cooperative Patent Classification (CPC):
**A63H 33/086**

(86) International application number:
**PCT/EP2018/083082**

(87) International publication number:
**WO 2019/106124 (06.06.2019 Gazette 2019/23)**

# (54) TOY BUILDING ELEMENT MADE OF A POLYMERIC PET MATERIAL

SPIELZEUGBAUELEMENT AUS EINEM POLYMEREN PET-MATERIAL

ÉLÉMENT DE JEU DE CONSTRUCTION EN MATÉRIAU PET POLYMÈRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.12.2017 DK PA201770900**

(43) Date of publication of application:
**07.10.2020 Bulletin 2020/41**

(73) Proprietor: **LEGO A/S**
**7190 Billund (DK)**

(72) Inventors:
- **MIKKELSEN, René**
**7190 Billund (DK)**
- **ANDERSEN, Emil**
**7190 Billund (DK)**

(74) Representative: **Guardian IP Consulting I/S**
**Diplomvej, Building 381**
**2800 Kgs. Lyngby (DK)**

(56) References cited:
**EP-A1- 3 216 718**
**WO-A1-2011/083173**
**WO-A1-2011/107273**
**BR-A2- PI0 802 245**
**GB-A- 2 532 152**
**US-A1- 2009 275 698**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 717 086 B1

## Description

### FIELD OF THE INVENTION

The present invention relates to a toy building element made of a polymeric poly(ethylene terephthalate) (PET) material and manufactured by injection moulding of a resin comprising PET polyester. The present invention also relates to a method for the manufacture of such a toy building element.

### BACKGROUND

Poly(ethylene terephthalate), commonly abbreviated PET or PETE, is a common thermoplastic polymer resin. It exists as an amorphous (transparent) state and in a semi-crystalline state. Amorphous PET material appears as a transparent material whereas the semi-crystalline PET material might appear transparent or opaque and white depending on its crystal structure and types and amounts of additives.

Today PET is widely used to make containers for food, water and carbonated water and soft drinks and the like due to its excellent combination of mechanical and gas barrier properties. The transparent water bottles are manufactured by blow moulding of amorphous PET. Hence, amorphous PET may be considered a low-cost raw material for the production of engineering compounds due to its widespread availability for example from recycled beverage bottles.

PET has numerous shortcomings from the perspective of an injection moulding compound. Unmodified PET is generally not useful as an injection moulding compound because drying requirements are essential. In general, the PET resin must be dried so that moisture content in the range of 50-100 ppm is reached in order to obtain injection moulded objects having satisfactory physical properties.

Slow crystallization rate is a challenge in injection moulding of PET resins. Semi-crystalline PET is typically injection moulded at temperatures ranging from 140 to 150 degrees C and addition of crystallization agents is required in order to obtain economical feasible production rates. Moreover, PET becomes increasingly brittle with increasing crystallinity. Amorphous PET is typically injection moulded at temperatures ranging from 5 to 40 degrees. In such cases it is typically necessary to add crystallization depressing agents so that amorphous PET containing no or only minor amounts of crystals is obtained. However, the amorphous PET tends to crystallize during heat treatment (annealing) and the resultant material is brittle.

Moreover, the properties of injection moulded PET objects are known to be unacceptable from a technical or commercial viewpoint because they exhibit poor dimensional stability and unsatisfactory impact strength.

The properties of PET can be modified and enhanced to such an extent that it can be used in industrial production of durable products. The slow crystallization rate can be improved by addition of nucleating agents and the poor impact strength can be improved by addition of glass, fibres, mineral or organic reinforcements, such as carbon nanotubes, graphene and graphite, and/or impact modifiers.

Standard bottle grade PET typically has an intrinsic viscosity in the range of 0.75 to 0.85 dl/g. Copolymer modification (acid or glycol modification) has been used to decrease the crystallization rate and to decrease the PET melting temperature, thereby decreasing the energy demand in the production process. Standard PET bottle polymers with copolymer modification typically have between 0% and 3 mol% isophthalic acid (IPA) modification in order to reduce the crystallization rate and allow the production of clear preforms weighing up to 100 grams.

US 3,405,198 describes impact resistant injection moulded polyethylene terephthalate products which are achieved by injection moulding polyethylene terephthalate as a molten composition in which there has been homogeneously distributed from 0.5 to 50% by weight of finely divided polyethylene.

US 4,753,980 describes toughened thermoplastic polyester composition, such as polyethylene terephthalate homopolymers and other similar polymers, in which the impact strength has been improved by blending certain ethylene copolymer tougheners into the polyester matrix so that the ethylene copolymer is dispersed throughout the polyester matrix as a discrete phase or discrete particles, which particles have a number of average particle size of less than 3 micrometers. The ethylene copolymer toughener is present in an amount of 3-40 weight % based on the total weight of the polyester and the ethylene copolymer only. Such compositions are said to possess extraordinary low temperature toughness as measured by a standard notched Izod test (ASTM D-256) with the samples at temperatures of 0 degrees C or lower.

Document EP3216718A1 discloses a toy building element comprising all the technical features set out in the preamble of claim 1.

PET also seems to be an interesting material for use in the manufacture of toys, such as toy building elements. However, impact strength needs to be modified in order to satisfy the requirements of product safety and play experience and so that long-lasting toy building bricks can be produced which do not break when for example dropped on the floor or when stepped on by an adult person. The improved impact strength need to be focused on injection moulded objects with complex geometries such as the geometry of a traditional LEGO@ brick which has been on the market for many

years when produced in conventional materials such as for example ABS.

## SUMMARY OF THE INVENTION

The inventors of the present invention have developed an injection moulding process to manufacture a toy building element, and in particular a toy building brick, that fulfills the requirements with regard to impact strength without using filled PET polyester, i.e. without addition of glass reinforcements or the like.

The inventors of the present invention have also surprisingly found that the presence of small amounts of reactive impact modifiers markedly affect the impact strength of an injection moulded toy building brick, whereas the impact strength of injection moulded impact bars when measured using the well-known Charpy v-notch test (ISO 179) does not seem to be affected by the presence of small amounts of reactive impact modifier.

In a first aspect the present invention is directed to a toy building element according to claim 1.

In a second aspect the present invention is directed to a method for the manufacture of a toy building element according to claim 13.

## BRIEF DESCRIPTION OF THE FIGURES

Figure 1 shows a traditional box-shaped LEGO® 2*4 brick.

## DETAILED DESCRIPTION OF THE INVENTION

The present invention is directed to a toy building element made of a polymeric poly(ethylene terephthalate) (PET) material and is manufactured by injection moulding of a resin comprising PET polyester.

The term "toy building element" as used herein includes the traditional toy building elements in the form of box-shaped building bricks provided with knobs on the upper side and complementary tubes on the lower side. A traditional box-shaped toy building brick is shown in Figure 1. The traditional box-shaped toy building bricks were disclosed for the first time in US 3,005,282 and are widely sold under the tradenames LEGO@ and LEGO® DUPLO®. The term also includes other similar box-shaped building bricks which are produced by other companies than The LEGO Group and therefore sold under other trademarks than the trademark LEGO.

The term "toy building element" also includes other kinds of toy building elements that form part of a toy building set which typically comprises a plurality of building elements that are compatible with and hence can be interconnected with each other. Such toy building sets are also sold under the trademark LEGO, such as for example LEGO@ bricks, LEGO@ Technic and LEGO® DUPLO®. Some of these toy building sets includes toy building figures, such as for example LEGO® Minifigures (see for example US 05/877,800), having complementary tubes on the lower side so that the figure can be connected to other toy building elements in the toy building set. Such toy building figures are also encompassed by the term "toy building element". The term also includes similar toy building elements which are produced by other companies than The LEGO Group and therefore sold under other trademarks than the trademark LEGO.

The toy building elements are available in a large variety of shapes, sizes and colours. One difference between LEGO@ bricks and LEGO® DUPLO® bricks is the size in that a LEGO® DUPLO® brick is twice the size of a LEGO® brick in all dimensions. The size of the traditional box-shaped LEGO® toy building brick having 4*2 knobs on the upper side is about 3.2 cm in length, about 1.6 cm in width and about 0.96 cm in height (excluding knobs), and the diameter of each knob is about 0.48 cm. In contrast, the size of a LEGO® DUPLO® brick having 4*2 knobs on the upper side is about 6.4 cm in length, about 3.2 cm in width and about 1.92 cm in height (excluding knobs), and the diameter of each knob is about 0.96 cm.

The toy building element is made of a polymeric poly(ethylene terephthalate) (PET) material and the element is manufactured by injection moulding of a resin comprising PET polyester.

The term "poly(ethylene terephthalate) polyester" or ("PET polyester") as used herein includes both homopolymers and copolymers of PET polyester. The homopolymer of PET polyester is produced by polymerization of the monomers ethylene glycol and terephthalic acid. The copolymer of PET polyester is produced by polymerization of the monomers ethylene glycol, terephthalic acid and a further comonomer which may be a diacid component and/or a diol component thereby producing a diacid modification and/or a diol modification. The diacid modification can be produced by selecting a comonomer from any number of diacids, including adipic acid, succinic acid, isophthalic acid, furandicarboxylic acid, phthalic acid, 4,4'-biphenyl dicarboxylic acid and 2,6-naphthalenedicarboxylic acid. Preferred diacid comonomers include isophthalic acid and furandicarboxylic acid. The diol modification can be produced by selecting a comonomer such as 1,4-cyclohexanedimethanol, 2,2,4,4-tetramehyl-1,3-cyclobutanediol, diethylene glycol, 1,2-propanediol, neopentylene glycol, 1,3-propanediol and 1,4 butanediol. Preferred diol comonomers include 1,4-cyclohexanedimethanol and 2,2,4,4-tetramehyl-1,3-cyclobutanediol. In some embodiments the PET polyester is produced by polymerization of the monomers ethylene glycol, terephthalic acid and one or more diacid component(s) and/or one or more diol component(s). Suitable selections of the one or more diacid component(s) and the one or more diol component(s) are within the skills of the practitioner.

In one preferred embodiment the diol component is not anhydrous hexitol, and in particular the diol component is not isosorbide.

The term "poly(ethylene terephthalate) polyester" also includes other well-known and obvious modifications of PET polyester.

In a preferred embodiment the PET polyester is an unfilled PET polyester.

By the term "unfilled PET polyester" as used herein is meant a PET polyester resin which does not comprise reinforcing and filling material, such as glass, glass beads, fibres, mineral reinforcements, such as aluminum silicate, asbestos, mica and calcium carbonate, and organic reinforcements, such as aramid fibres, carbon nanotubes, graphene and graphite.

In one embodiment the resin comprising PET polyester does not contain glass, glass beads and/or glass fibres. In one embodiment the resin comprising PET polyester does not contain fibres. In one embodiment the resin comprising PET polyester does not contain inorganic reinforcements, such as aluminum silicate, asbestos, mica and calcium carbonate. In one embodiment the resin comprising PET polyester does not contain organic reinforcements, such as aramid fibres, carbon nanotubes, graphene and graphite. In one embodiment the resin comprising PET polyester does not contain glass and fibres.

In another preferred embodiment the resin comprising PET polyester further comprises one or more filler(s) in an amount of up to 5% (wt/wt) relative to the total weight of the resin, such as from 0.1-5% (wt/wt), more preferred from 0.2-4% (wt/wt), most preferred from 0.5-3% (wt/wt). The one or more filler(s) may be inorganic particulate material or a nanocomposite or a mixture thereof.

Suitable examples of inorganic particulate material include inorganic oxides, such as glass, MgO, SiO2, TiO2 and Sb2O3; hydroxides, such as Al(OH)3 and Mg(OH)2; salts, such as CaCO3, BaSO4, CaSO4 and phosphates; silicates, such as talc, mica, kaolin, wollastonite, montmorillonite, nanoclay, feldspar and asbestos; metals, such as boron and steel; carbon - graphite, such as carbon fibers, graphite fibers and flakes, carbon nanotubes and carbon black. Suitable examples of inorganic particulate material also include surface treated and/or surface modified SiO2 and TiO2, such as for example alumina surface modified TiO2.

Suitable examples of nanocomposites include clay filled polymers, such as clay/low density polyethylene (LOPE) nanocomposites, clay/high density polyethylene (HOPE) nanocomposites, acrylonitrile-butadiene-styrene (ABS)/clay nanocomposites, polyimide (PI)/clay nanocomposites, epoxy/clay nanocomposites, polypropylene (PP)/clay nanocomposites, poly (methyl methacrylate) (PMMA)/clay nanocomposites and polyvinyl chloride (PVC)/clay nanocomposites; alumina filled polymers, such as epoxy/alumina nanocomposites, PMMA/alumina nanocomposites, PI/alumina nanocomposites, PP/alumina nanocomposites, LDPE/alumina nanocomposites and cross-linked polyethylene (XLPE)/alumina nanocomposites; barium titanate filled polymers, such as HDPE/barium titanate nanocomposites and polyetherimide (PEI)/barium titanate nanocomposites; silica filled polymers, such as PP/silica nanocomposites, epoxy/silica nanocomposites, PVC/silica nanocomposites, PEI/silica nanocomposites, PI/silica nanocomposites, ABS/silica nanocomposites, and PMMA/silica nanocomposites; and zinc oxide filled polymers, such as LDPE/zinc oxide nanocomposites, PP/zinc oxide nanocomposites, epoxy/zinc oxide nanocomposites and PMMA/zinc oxide nanocomposites.

In one embodiment the resin comprises PET polyester in an amount of at least 50% (wt/wt) relative to the total weight of the resin. In other embodiments the resin comprises PET polyester in an amount of at least 60% or 70% or 80% (wt/wt) relative to the total weight of the resin. In preferred embodiments the resin comprises PET polyester in an amount of at least 85%, such as at least 90% (wt/wt) relative to the total weight of the resin, more preferred at least 95% or 97% or 99% (wt/wt) relative to the total weight of the resin.

In another embodiment the resin comprises PET polyester in an amount of 50-99% (wt/wt) relative to the total weight of the resin. In other embodiments the resin comprises PET polyester in an amount of 60-95% or 70-90% or 80-85% (wt/wt) relative to the total weight of the resin. In a preferred embodiment the resin comprises PET polyester in an amount of 85-97%, more preferred 90-97%, even more preferred 90-95% and most preferred 90-92% (wt/wt) relative to the total weight of the resin.

The PET polyester in the resin may be a bio-based polymer, a hybrid bio-based polymer or a petroleum-based polymer, or a mixture thereof.

By the term "bio-based polymer" as used herein is meant a polymer which is produced by chemical or biochemical polymerization of monomers derived from biomass. Bio-based polymers include polymers produced by polymerization of one type of monomer derived from biomass as well as polymers produced by polymerization of at least two different monomers derived from biomass.

In a preferred embodiment the bio-based polymer is produced by chemical or biochemical polymerization of monomers which are all derived from biomass.

Bio-based polymers according to the present invention include

- Polymers produced by biochemical polymerization, i.e. for example by use of microorganisms. The monomers are produced using biomass as substrate.
- Polymers produced by chemical polymerization, i.e. by chemical synthesis. The monomers are produced using biomass as substrate.

In some embodiments, the bio-based polymer is produced by biochemical polymerization. In other embodiments the bio-based polymer is produced by chemical polymerization. In yet other embodiments the bio-based polymers are produced by biochemical or chemical polymerization. The bio-based polymer may also be produced by a combination of biochemical and chemical polymerization, for example in cases where two monomers are combined to a dimer by a biochemical reaction path and then the dimers are polymerized by use of chemical reaction.

Bio-based polymers also include polymers having the same molecular structure as petroleum-based polymers, but which have been produced by chemical and/or biochemical polymerization of monomers derived from biomass.

By the term "petroleum-based polymers" as used herein is meant a polymer produced by chemical polymerization of monomers derived from petroleum, petroleum by-products or petroleum-derived feedstocks.

By the term "hybrid bio-based polymer" as used herein is meant a polymer which is produced by polymerization of at least two different monomers, where at least one monomer is derived from biomass and at least one monomer is derived from petroleum, petroleum by-products or petroleum-derived feedstocks. The polymerization process is typically a chemical polymerization process.

The hybrid bio-based polymers may also be characterized by their content of bio-based carbon per total carbon content. The term "bio-based carbon" as used herein refers to the carbon atoms that originate from the biomass that is used as substrate in the production of monomers which form part of the bio-based polymers and/or the hybrid bio-based polymers. The content of bio-based carbon in the hybrid bio-based polymer can be determined by Carbon-14 isotope content as specified in ASTM D6866 or CEN/TS 16137 or an equivalent protocol.

In some embodiments the content of bio-based carbon in the hybrid bio-based polymer is at least 25% based on the total carbon content of the hybrid bio-based polymer, such as for example at least 30% or at least 40%. In other embodiments the content of bio-based carbon in the hybrid bio-based polymer is at least 50% based on the total carbon content, such as at least 60% for example at least 70%, such as at least 80% based on the total carbon content of the hybrid bio-based polymer.

In one embodiment the ethylene glycol monomers are bio-based monomers whereas the terephthalic acid monomers are not bio-based monomers, such as for example petroleum-based monomers. In another embodiment the terephthalic acid monomers are bio-based monomers whereas the ethylene glycol monomers are not bio-based monomers. In yet another embodiment both the ethylene glycol monomers and the terephthalic acid monomers are bio-based monomers. In even yet another embodiment neither the ethylene glycol monomers nor the terephthalic acid monomers are bio-based monomers.

In one preferred embodiment the ethylene glycol monomers are bio-based monomers derived from biomass and having a content of bio-based carbon equal to 100% based on the total carbon content in the ethylene glycol monomers. In other embodiments the ethylene glycol monomers have a content of bio-based carbon of at least 25% based on the total carbon content in the ethylene glycol monomers, such as for example at least 50%, preferably at least 70%, more preferred at least 90% and most preferred at least 95%.

In one preferred embodiment the terephthalic acid monomers are bio-based monomers derived from biomass and having a content of bio-based carbon equal to 100% based on the total carbon content in the terephthalic acid monomers. In other embodiments the terephthalic acid monomers have a content of bio-based carbon of at least 25% based on the total carbon content in the terephthalic acid monomers, such as for example at least 50%, preferably at least 70%, more preferred at least 90% and most preferred at least 95%.

In some embodiments the content of bio-based carbon in the PET polyester is at least 25% based on the total carbon content in the PET polyester. In other embodiments the content of bio-based carbon in the PET polyester is at least 50% based on the total carbon content, such as at least 60% for example at least 70%, preferably at least 80%, more preferably at least 90%, even more preferably at least 95%. In the most preferred embodiment the content of bio-based carbon in the PET polyester is 100% based on the total carbon content in the PET polyester.

In some embodiments the content of bio-based carbon in the resin is at least 25% based on the total carbon content in the resin. In other embodiments the content of bio-based carbon in the resin is at least 50% based on the total carbon content in the resin, such as at least 60% for example at least 70%, preferably at least 75%, more preferably at least 80%, even more preferably at least 85%. In the most preferred embodiment the content of bio-based carbon in the resin is 90% based on the total carbon content in the resin.

The terms "bio-based polymer", "hybrid bio-based polymer" and "petroleum-based polymer" also include recycled polymers. By the term "recycled polymers" as used herein is meant polymers which have been obtained by recovering scrap or waste plastic and reprocessing it into a useful polymeric material. The term covers both mechanical recycled PET and chemical recycled PET. By the term "mechanical recycled PET" is meant PET which has been melted, optionally

upgraded whereby the length of the polymer chains are increased, and then formed into pellets or the like for use in a subsequent injection moulding process or in the compounding process prior to injection moulding. By the term "chemical recycled PET" is meant PET which is obtained by chemically degrading PET to its monomers and/or oligomers, for example by use of microorganisms, purifying the monomers/oligomers and then polymerizing the monomers/oligomers to obtain recycled PET.

In some embodiments the resin comprises mechanical recycled PET polyesters. In other embodiments the resin comprises mechanical recycled PET polyesters and bio-based PET polyesters. In other embodiments the resin comprises mechanical recycled PET polyesters and hybrid bio-based PET polyesters. In yet other embodiments the resin comprises mechanical recycled PET polyesters and petroleum-based PET polyesters. In still other embodiments the resin comprises mechanical recycled PET polyesters, bio-based PET polyesters and petroleum-based PET polyesters. In still other embodiments the resin comprises mechanical recycled PET polyesters, hybrid bio-based PET polyesters and petroleum-based PET polyesters. In yet other embodiments the resin comprises mechanical recycled PET polyesters, bio-based PET polyesters and hybrid bio-based PET polyesters. And in other embodiments the resin comprises mechanical recycled PET polyesters, bio-based PET polyesters, hybrid bio-based PET polyesters and petroleum-based PET polyesters.

In some embodiments, the amount of mechanical recycled PET polyester in the resin is at least 10% (wt/wt) based on the total weight of the resin, such as at least 20%, or for example at least 30%, such as at least 40% or for example at least 50%. In other embodiments, the amount of mechanical recycled PET polyester in the resin is at least 60% (wt/wt) based on the total weight of the resin, such as at least 70%, or for example at least 75%, such as at least 80% or for example at least 85%.

In some embodiments the PET polyester comprises chemical recycled PET monomers. In other embodiments the PET polyester comprises chemical recycled PET monomers and bio-based PET monomers. In other embodiments the PET polyester comprises chemical recycled PET monomers and hybrid bio-based PET monomers. In yet other embodiments the PET polyester comprises chemical recycled PET monomers and petroleum-based PET monomers. In still other embodiments the PET polyester comprises chemical recycled PET monomers, bio-based PET monomers and petroleum-based PET monomers. In still other embodiments the PET polyester comprises chemical recycled PET monomers, hybrid bio-based PET monomers and petroleum-based PET monomers. In yet other embodiments the PET polyester comprises chemical recycled PET monomers, bio-based PET monomers and hybrid bio-based PET monomers. And in other embodiments the PET polyester comprises chemical recycled PET monomers, bio-based PET monomers, hybrid bio-based PET monomers and petroleum-based PET monomers.

In some embodiments, the amount of chemical recycled PET monomers in the PET polyester is at least 10% (wt/wt) based on the total weight of the PET polyester, such as at least 20%, or for example at least 30%, such as at least 40% or for example at least 50%. In other embodiments, the amount of chemical recycled PET monomers in the PET polyester is at least 60% (wt/wt) based on the total weight of the PET polyester, such as at least 70%, or for example at least 80%, such as at least 90% or for example at least 95%.

It is known that injection moulding of a resin comprising pure homopolymeric PET may be difficult because of the difficulty of controlling the crystallization during the injection moulding. In order to overcome this draw back it is known to add crystallization inhibiting agents, such as isophthalic acid (IPA), which depresses the crystallization rate of PET resulting in the manufacture of amorphous PET. Other dicarboxylic acids and/or diols that also act as crystallization inhibiting agents and provide a crystallization rate depressing effect which is similar or equivalent to the effect obtained when using isophthalic acid are also suitable for use in the present invention. A suitable example of a dicarboxylic acid that may also depress the crystallization rate of PET is furandicarboxylic acid.

In some embodiments the resin comprises poly(ethylene terephthalate-co-isophthalate) polyesters. In a preferred embodiment the PET polyester in the resin is poly(ethylene terephthalate-co-isophthalate) polyesters. The amount of isophthalic acid in the poly(ethylene terephthalate-co-isophthalate) polyesters is typically 0.5-12 mol% and preferably 1-3 mol%.

The chemical composition of poly(ethylene terephthalate-co-isophthalate) polyesters, i.e. the amount of isophthalic acid in the poly(terephthalate-co-isophthalate) polyester, may be characterised by 13C Nuclear Magnetic Resonance spectroscopy (C NMR) according to the method described in "Martinez de Ilarduya, A.; Kint, D. P.; Muñoz-Guerra, S. Sequence Analysis of Poly (ethylene terephthalate-co-isophthalate) Copolymers by 13C NMR. Macromolecules 2000, 33, 4596-4598". Accordingly, the amount of isophthalic acid may be measured using this C NMR method.

An important characteristic of PET is the intrinsic viscosity (IV). The intrinsic viscosity which is measured in dl/g is found by extrapolating the relative viscosity to zero concentration. It depends on the length of the PET polymer chains. The longer the polymer chains the more entanglements between chains and therefore the higher the viscosity. The average length of a particular batch of PET resin can be controlled during the polymerization process.

The PET Intrinsic Viscosity (IV) may be measured according to ASTM D4603.

High IV homo- and copolymer PET compositions are difficult to process in injection moulding due to their high viscosity.

In some embodiments the IV of the PET polyester ranges from 0.6-1.1 dl/g, such as 0.7-0.9 dl/g, preferably from 0.75-0.85 dl/g.

In preferred embodiments the PET polyester is PET of bottle grade. The term "bottle grade" is well known in the technical area and refers to PET starting materials that can easily be processed into bottles. In most embodiments the "bottle grade" PET is made of poly(ethylene terephthalate-co-isophthalate) polyesters comprising 1-3 mol% of isophthalic acid. In bottle grade PET the IV is typically in the range of 0.70-0.78 dl/g for non-carbonated water, and in the range of 0.78-0.85 for carbonated water.

Suitable examples of PET grades which are also commercial available include bottle grade EASTLON PET CB-600, CB-602 and CB-608 supplied by Far Eastern New Century (FENC), commercial grade post-consumer rPET CB-602R supplied by FENC, partially bio-based bottle grade PET CB-602AB supplied by FENC and homopolymer PET grade 6020 supplied by Invista.

In some embodiments the resin further comprises an impact modifier. The impact modifier may be a reactive impact modifier or it may be a non-reactive impact modifier. In some embodiments the resin may comprise both reactive and non-reactive impact modifiers. In a preferred embodiment the resin comprises a reactive impact modifier.

By the term "impact modifier" as used herein is meant an agent that, when added to the resin, increases the impact strength of the injection moulded PET element when the impact strength is measured using the "drop test" as defined below.

The reactive impact modifiers have functionalized end groups. Functionalization serves two purposes: 1) to bond the impact modifier to the polymer matrix and 2) to modify the interfacial energy between the polymer matrix and the impact modifier for enhanced dispersion. Preferred examples of such functionalized end groups include glycidylmethacrylates, maleic anhydrides and carboxylic acids.

Typically, reactive impact modifiers are preferred for strengthening of PET since these form a stable dispersed phase by grafting to the PET matrix. Non-reactive impact modifiers can be dispersed into PET by intensive compounding but may coalesce downstream in the compounder.

In the present invention, reactive impact modifiers are preferred. In a preferred embodiment the impact modifier is a copolymer of the formula X/Y/Z where X is aliphatic or aromatic hydrocarbon polymer having 2-8 carbon atoms, Y is a moiety comprising an acrylate or methacrylate having 3-6 and 4-8 carbon atoms, respectively, and Z is a moiety comprising methacrylic acid, glycidyl methacrylate, maleic anhydride or carboxylic acid.

In one preferred embodiment the impact modifier may be described by the formula:

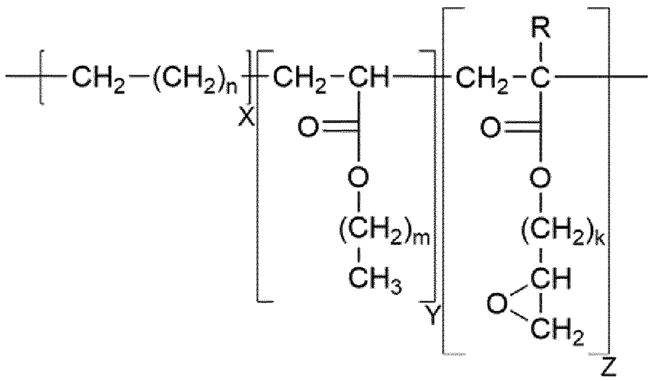

where

- n is an integer from 1 to 4,
- m is an integer from 0 to 5,
- k is an integer from 0 to 5, and
- R is an alkyl of 1 to 5 carbon or 1 hydrogen atom.

X constitutes 40-90% (wt/wt) of the impact modifier, and Y constitutes 0-50% (wt/wt), such as 10-40% (wt/wt), preferably 15-35% (wt/wt), most preferably 20-35% (wt/wt) of the impact modifier, and Z constitutes 0.5-20% (wt/wt), preferably 2-10% (wt/wt), most preferably 3-8% (wt/wt) of the impact modifier.

In other embodiments, X constitutes 70-99.5% (wt/wt) of the impact modifier, preferably 80-95% (wt/wt), most preferably 92-97% (wt/wt) and Y constitutes 0% (wt/wt) of the impact modifier, and Z constitutes 0.5-30% (wt/wt), preferably 5-20% (wt/wt), most preferably 3-8% (wt/wt) of the impact modifier.

Suitable examples of specific impact modifiers that can be used in the resin of the present invention include

ethylene-ethylene acrylate-glycidyl methacrylate and ethylene-butyl acrylate-glycidyl methacrylate. Commercial available impact modifiers include Paraloid™ EXM-2314 (an acrylic copolymer from Dow Chemical Company), Lotader® AX8700, Lotader® AX8900, Lotader AX8750®, Lotader® AX8950 and Lotader® AX8840 (manufactured by Arkema) and Elvaloy® PTW (manufactured by DuPont).

Other suitable examples of specific impact modifiers that can be used in the resin of the present invention include anhydride modified ethylene acrylates.

Commercial available impact modifiers include Lotader® 3210, Lotader® 3410, Lotader® 4210, Lotader® 3430, Lotader® 4402, Lotader® 4503, Lotader® 4613, Lotader® 4700, Lotader® 5500, Lotader® 6200, Lotader® 8200, Lotader® HX8210, Lotader® HX8290, Lotader® LX4110, Lotader® TX8030 (manufactured by Arkema), Bynel® 21E533, Bynel® 21E781, Bynel® 21E810 and Bynel® 21E830 (manufactured by DuPont).

In other embodiments the impact modifier is a modified ethylene vinyl acetate, such as for example Bynel® 1123 or Bynel® 1124 (manufactured by DuPont), an acid modified ethylene acrylate, such as for example Bynel® 2002 or Bynel® 2022 (manufactured by DuPont), a modified ethylene acrylate, such as for example Bynel® 22E757, Bynel® 22E780 or Bynel® 22E804 (manufactured by DuPont), an anhydride modified ethylene vinyl acetate, such as for example Bynel® 30E670, Bynel® 30E671, Bynel® 30E753 or Bynel® 30E783 (manufactured by DuPont), and acid/acrylate modified ethylene vinyl acetate, such as for example Bynel® 3101 or Bynel® 3126 (manufactured by DuPont), an anhydride modified ethylene vinyl acetate, such as for example Bynel® E418, Bynel® 3810, Bynel® 3859, Bynel® 3860 or Bynel® 3861 (manufactured by DuPont), an anhydride modified ethylene vinyl acetate, such as for example Bynel® 3930 or Bynel® 39E660 (manufactured by DuPont), and anhydride modified high density polyethylene, such as for example Bynel® 4033 or Bynel® 40E529 (manufactured by DuPont), an anhydride modified linear low density polyethylene, such as for example Bynel® 4104, Bynel® 4105, Bynel® 4109, Bynel® 4125, Bynel® 4140, Bynel® 4157, Bynel® 4164, Bynel® 41E556, Bynel® 41E687, Bynel® 41E710, Bynel® 41E754, Bynel® 41E755, Bynel® 41E762, Bynel® 41E766, Bynel® 41E850, Bynel® 41E865 or Bynel® 41E871 (manufactured by DuPont) an anhydride modified low density polyethylene, such as for example Bynel® 4206, Bynel® 4208, Bynel® 4288 or Bynel® 42E703 (manufactured by DuPont) or an anhydride modified polypropylene, such as for example Bynel® 50E571, Bynel® 50E662, Bynel® 50E725, Bynel® 50E739, Bynel® 50E803 or Bynel® 50E806 (manufactured by DuPont).

Other suitable impact modifiers include maleic anhydride grafted impact modifiers. Specific examples of such impact modifiers include chemically modified ethylene acrylate copolymers, such as Fusabond® A560 (manufactured by DuPont), an anhydride modified polyethylene, such as Fusabond® E158 (manufactured by DuPont), an anhydride modified polyethylene resin, such as for example Fusabond® E564 or Fusabond® E589 or Fusabond® E226 or Fusabond® E528 (manufactured by DuPont), an anhydride modified high density polyethylene, such as for example Fusabond ® E100 or Fusabond ® E265 (manufactured by DuPont), an anhydride modified ethylene copolymer, such as for example Fusabond ® N525 (manufactured by DuPont), or a chemically modified propylene copolymer, such as for example Fusabond ® E353 (manufactured by DuPont).

Yet other suitable impact modifiers include ethylene-acid copolymer resins, such as ethylene-methacrylic acid (EMAA) based copolymers and ethylene-acrylic acid (EAA) based copolymers. Specific examples of ethylene-methacrylic acid based copolymer impact modifiers include Nucrel® 403, Nucrel® 407HS, Nucrel® 411HS, Nucrel® 0609HSA, Nucrel® 0903, Nucrel® 0903HC, Nucrel® 908HS, Nucrel® 910, Nucrel® 910HS, Nucrel® 1202HC, Nucrel® 599, Nucrel® 699, Nucrel® 925 and Nucrel® 960 (manufactured by DuPont). Specific examples of ethylene-acrylic acid based copolymers Nucrel® 30707, Nucrel® 30907, Nucrel® 31001, Nucrel® 3990 and Nucrel® AE (manufactured by DuPont). Other specific examples of ethylene of ethylene-acrylic acid (EAA) based copolymers include Escor™ 5000, Escor™ 5020, Escor™ 5050, Escor™ 5080, Escor™ 5100, Escor™ 5200 and Escor™ 6000 (manufactured by ExonMobile Chemical).

Still other suitable impact modifiers include ionomers of ethylene acid copolymers. Specific examples of such impact modifiers include Surlyn® 1601, Surlyn® 1601-2, Surlyn® 1601-2LM, Surlyn® 1605, Surlyn® 8150, Surlyn® 8320, Surlyn® 8528 and Surlyn® 8660 (manufactured by DuPont).

In other embodiments the impact modifier is an alkyl methacrylate-silicone/alkyl acrylate graft copolymer. The "alkyl methacrylate" of the graft copolymer may be one selected from the group consisting of methyl methacrylate, ethyl methacrylate, propyl methacrylate, isopropyl methacrylate and butyl methacrylate. The "silicone/alkyl acrylate" in the graft copolymer refers to a polymer obtained by polymerizing a mixture of a silicone monomer and an alkyl acrylate monomer. The silicone monomer may be selected from the group consisting of dimethylsiloxane, hexamethylcyclotrisiloxane, octamethylcyclotetrasiloxane, decamethylcyclopentasiloxane, dodecamethylcyclohexasiloxane, trimethyltriphenylcyclotetrasiloxane, tetramethyltetraphenylcyclotetrasiloxane and octaphenylcyclotetrasiloxane. The alkyl monomer may be selected from the group consisting of methyl methacrylate, ethyl methacrylate, propyl methacrylate, isopropyl methacrylate, butyl methacrylate and butyl methacrylate. The graft copolymer is in the form of core-shell rubber and has a graft rate of 5 to 90% (wt/wt), a glass transition temperature of the core of -150 to -20 degrees C, and a glass transition temperature of the shell of 20 to 200 degrees C. In one embodiment of the present invention, the graft copolymer is methyl methacrylate-silicone/butyl acrylate graft copolymer. Specific examples include S-2001, S-2100, S-2200 and S-2501 manufactured by Mitsubishi Rayon Co., Ltd. In Japan.

Other suitable impact modifiers include the siloxane polymers mentioned in US 4,616,064, which contain siloxane units, and at least one of carbonate, urethane or amide units.

Suitable impact modifiers also include those mentioned in WO 2018/089573 paragraphs [0043]-[0072].

Other suitable impact modifiers include core shell impact modifiers such as those mentioned in US 5,409,967.

In some embodiments the amount of impact modifier in the resin is 0.1-3% (wt/wt) based on the total weight of the resin. In preferred embodiments the amount of impact modifier in the resin is 0.5-5% (wt/wt) based on the total weight of the resin, such as 1-3% (wt/wt) based on the total weight of the resin.

In other embodiments the amount of impact modifier in the resin is 5-25% (wt/wt) based on the total weight of the resin. Hence, in some embodiments the amount of impact modifier in the resin is 5-15% (wt/wt) based on the total weight of the resin, such as 5-10% or 10-15% or 8-12% (wt/wt) based on the total weight of the resin. In yet other embodiments the amount of impact modifier in the resin is 15-25% (wt/wt) based on the total weight of the resin, such as 15-20% or 20-25% (wt/wt) based on the total weight of the resin.

The use of only small amounts of impact modifier, such as 1-3% (wt/wt) based on the total weight of the resin, is beneficial for the overall injection moulding process because it will be easier to disperse the impact modifier evenly in the resin without the need of compounding the resin prior to feeding it to the injection moulding machine.

The resin comprising PET polyester may in addition to fillers and impact modifiers also comprise other additives, such as nucleating agents, anti-hydrolysis additives, release agent, lubricants, UV stabilizers, flame retardants, chain extenders, processing stabilizers, antioxidants and colouring agents or pigments.

PET can be found in amorphous state and in semi-crystalline state. In the amorphous state the PET comprises no crystals or only very few crystals whereas in the semi-crystalline state the degree of crystallinity is markedly higher. Hence, in some embodiments the toy building element is made of amorphous polymeric PET material having a degree of crystallinity between 0.5 and 10%, preferably between 0.5 and 5%, such as between 0.5 and 2%. In other embodiments the toy building element is made of semi-crystalline polymeric PET material having a degree of crystallinity between 10 and 70%, preferably between 10 and 50%, such as for example between 10 and 30%.

The degree of crystallinity can be calculated using the formula:

$$\% \text{ crystallinity} = [(\Delta H_f - \Delta H_c)/\ \Delta H_f^{\circ}] * 100\%$$

where the values $\Delta H_f$, $\Delta H_c$ and $\Delta H_f^o$ are measured as described in "Kong, Y.; Hay, J. The measurement of the crystallinity of polymers by DSC, Polymer, 2002, 43, 3873-3878" on a DSC autosampler (Q2000, TA Instruments, USA) on 20 mg flat cut-out sample.

In cases where a high degree of crystallinity is aimed at, nucleating agents may be added to the resin prior to injection moulding in order to increase the crystallization rate. In some embodiments the amount of crystallization agents in the resin is 0.025 to 2% (w/w) based on the total weight of the resin, such as 0.05% to 1.5% (w/w), for example 0.1% to 1% (w/w) based on the total weight of the resin.

In a preferred embodiment the polymeric PET material is amorphous PET.

The present invention is also directed to a method for the manufacture of a toy building element comprising the steps of

a) providing a resin comprising PET polyester, and
b) injection moulding said resin.

Suitable resins to be provided and processed in the method include those described above.

In preferred embodiments the resin further comprises an impact modifier. The impact modifier may be a reactive impact modifier or a non-reactive impact modifier. In some embodiments the resin may comprise a mixture of reactive and non-reactive impact modifiers. In a preferred embodiment the resin comprises one or more reactive impact modifier(s).

Suitable examples of impact modifiers include those mentioned above.

In some embodiments the impact modifier is mixed with the PET polyester during feeding of the injection moulding machine. In such embodiments the amount of impact modifier is preferably at most 3% (wt/wt) based on the total weight of the resin so that suitable dispersion of the impact modifier in the resin is obtained.

In preferred embodiments a reactive impact modifier is mixed with the PET polyester during feeding of the injection moulding machine. In such embodiments the amount of reactive impact modifier is preferably at most 3% (wt/wt) based on the total weight of the resin so that suitable dispersion of the impact modifier in the resin is obtained. In other embodiments the amount of reactive impact modifier is at most 9% (wt/wt), for example at most 6% (wt/wt), based on the total weight of the resin.

In other embodiments the impact modifier is mixed with the PET polyester prior to feeding the mixture to the injection moulding machine. The mixing may be performed by dry mixing or by compounding.

In some embodiments the impact modifier and the PET polyester is dry mixed prior to feeding of the injection moulding machine. In such embodiments the amount of impact modifier is preferably at most 5% (w/w) based on the total weight of the resin so that suitable dispersion of the impact modifier in the resin is obtained.

In other embodiments the impact modifier and the PET polyester are mixed by compounding prior to feeding it to the injection moulding machine. In such cases the resin is brought to its melted state and then thoroughly mixed to ensure sufficient dispersion of the impact modifier in the PET polyester and then the mixture is cooled, transformed into pellets and the pellets are then fed to the injection moulding machine.

In embodiments where the impact modifier and the PET polyester are mixed by compounding, the amount of impact modifier is typically up to 25% (w/w) based on the total weight of the resin. In some embodiments the amount of impact modifier is 2-15% (wt/wt), such as 2-5% (wt/wt) or 5-8% (wt/wt) or 8-12% (wt/wt) based on the total weight of the resin.

In some embodiments the impact modifier and the PET polyester is compounded by thoroughly mixing to ensure sufficient dispersion and then fed directly into the injection moulding machine.

In other embodiments the PET polyester and the impact modifier may be mixed into a masterbatch which is then mixed with the rest of the resin during feeding of the injection moulding machine.

Additives, such as fillers, nucleating agents, anti-hydrolysis additives, release agents, lubricants, UV stabilizers, flame retardants, chain extenders processing stabilizers, antioxidants and colouring agents or pigments, may be added and mixed with the impact modifier and the PET polyester either prior to or during feeding to the injection moulding machine.

The moulding temperature is very important for the degree of crystallinity of the final polymer material.

In cases where amorphous PET polyester is aimed at, the mould temperature is preferably in the range of 5-30 degrees C, such as 15-25 degrees C. In such cases the PET polyester in the resin is typically a copolymer of PET polyester, such as for example poly(ethylene terephthalate-co-isophthalate).

In other cases where semi-crystalline or opaque PET material is aimed at, the mould temperature is preferably in the range of about 100-150 degrees C. In such cases nucleating agents are typically added to the resin prior to injection moulding in order to promote crystallization.

**EXAMPLES**

In the examples below it is described how a toy building brick is manufactured by injection moulding. The manufactured bricks were subsequently tested by the "Drop test" and the "Charpy v-notch test".

**Drop test**

Purpose: Evaluate the impact strength of traditional LEGO® 2*4 bricks (also referred to as test specimen) produced in a certain material by dropping an iron plumb on to a test brick from various heights to determine the specific height at which the test specimen fails. A traditional LEGO® 2*4 brick is shown in Figure 1.

Test person: The test person is an average adult.

Test conditions: The test should be performed indoor with a temperature of 20-25 degrees C and 20-65% relative humidity.

Test specimen: The test is conducted on similar coloured traditional LEGO® 2*4 bricks which have been produced in a relevant material. Following production, the test specimens should be stored at indoor conditions at 20-25 degrees C and 20-65% relative humidity.

Test equipment: The test equipment is similar to that described in the safety standard EN 71-1: 2014 Mechanical and Physical Properties, section 8.7; Impact test. The plumb is dropped on to the test specimen from different specified drop heights. The plumb is fitted with an axle to hold it in place before the drop and a release mechanism is built into the axle which enables a controlled timing for the drop by pulling a split. The holder of the plumb is connected to a vertical rod and the drop height is controlled by sliding the holder of the plumb up and down this vertical rod. The total plumb/axle weight is 1.00 kg and the plumb has a diameter of 8 cm. The base plate of the test equipment which holds the test specimen is constructed in iron.

Test: The test is carried out within 2-10 days after production according to the following procedure:

- The plumb is fixed in position where the bottom of the plumb is 10 cm above the base plate.
- The test specimen is placed on the base plate directly under the plumb with the coupling knobs on the upper-side facing downwards and the complementary tubes on the lower-side facing upwards.
- The plumb is dropped on to the test brick and the brick is inspected for signs of failure, i.e. ruptures or cracks.
- If the test specimen shows no sign of failure the plumb is again placed in the holder and the height of the plumb is increased by 2 cm.

- A new test specimen is placed below the plumb as described above and the plumb is once again released followed by inspection of the test specimen.
- This procedure is repeated and the plumb height increased in steps of 2 cm until a certain height is reached where the test specimen fails. At this height a new second test specimen is tested and if this specimen also fails then the plumb height is recorded as the failure height. In case the second specimen does not fail then the plumb height is further increased by 2 cm and a new specimen is tested.
- The final failure height is described as the plumb height that causes two consecutive failures.

**Charpy v-notch test**

Moulded plastic rods with dimensions of 6.0 x 4.0 x 50.0 $mm^3$, B × W × H, and in the relevant material to be tested were cut according to ISO 179-1/1 eA with a notch cutter (ZNO, Zwick, Germany) with a notch tip diameter of 0.5 mm. The notched specimens were placed with v-notch opposite pendulum and tested in a pendulum impact machine (HOT, Zwick, Germany) according to the principles described in ISO 179-1:2010.

**Example 1. Modification of PET with Paraloid™ EXL-2314**

Bottle grade PET CB-602 (supplied by Far Eastern New Century (FENC)) with an IV of 0.80 dl/g was dried at 150 degrees C to a moisture content of 50-100 ppm. Upon ambient cooling of the dried PET material to below 50 degrees C, the PET was dry blended with the impact modifier Paraloid™ EXM-2314 (an acrylic copolymer from Dow Chemical Company) in amounts as mentioned in the table below. Blends were processed either directly via injection moulding (Arburg, Allrounder 470 E 1000-400, 30 mm screw, Germany) or via extrusion (Twin screw, Labtech Engineering Company Ltd, Thailand,) followed by injection moulding.

| Trial | PET grade | Paraloid™ EXL-2314 in % (w/w) | Compounding using extruder | Injection moulding | Tensile + impact bars | 2*4 bricks |
|---|---|---|---|---|---|---|
| 1-1 | CB-602 | 0 | No | Yes | X | X |
| 1-2 | CB-602 | 1 | No | Yes | X | |
| 1-3 | CB-602 | 2 | No | Yes | X | X |
| 1-4 | CB-602 | 4 | No | Yes | X | X |
| 1-5 | CB-602 | 0 | Yes | Yes | X | |
| 1-6 | CB-602 | 1 | Yes | Yes | X | |
| 1-7 | CB-602 | 2 | Yes | Yes | X | |

The injection moulding parameters were as follows:

Melt temperature: 295 degrees C
Hot runner temperature: 300 degrees C
Mould temperature: 20 degrees C

The extrusion processing parameters were as follows:

Screw speed: 60 rpm
Barrel temperature: 290 degrees C
Melt temperature: 295-300 degrees C

The obtained 2*4 bricks and impact bars were tested in the Drop test and the Charpy v-notch test, respectively,

as described above. The results are shown in the table below.

| Trial | Charpy v-notch (kJ/m2) | Drop test (2*4 brick) cm |
|---|---|---|
| 1-1 | 4.0 | 22 |
| 1-2 | 3.0 | - |
| 1-3 | 3.1 | 34 |
| 1-4 | 3.4 | 34 |
| 1-5 | 3.8 | - |
| 1-6 | 3.2 | - |
| 1-7 | 4.3 | - |

The result show that the addition of small amounts of impact modifier does not affect the impact strength when measured using the Charpy v-notch test, whereas a distinct improvement in impact strength was seen when measured using the drop test, i.e. the value of 22 cm was increased to 34 cm when adding 2 or 4% impact modifier, respectively.

This result is very interesting because it shows that the Charpy v-notch test is not useful when measuring the impact strength of complex geometries, such as 2*4 bricks, at small amounts of impact modifier.

**Example 2. Modification of PET and recycled PET (rPET) with ethylene-glycidyl methacrylate copolymer (E-GMA) Lotader® AX8700 and Lotader® AX8900**

Bottle grade PET CB-602 (supplied by Far Eastern New Century (FENC)) with an IV of 0.80 dl/g and commercial grade post-consumer rPET CB-602R (supplied by FENC) with an IV of 0.82 dl/g were dried at 150 degrees C to 50-100 ppm moisture content. Upon ambient cooling of the dried PET samples to below 50 degrees C, the samples were dry blended with Lotader® AX8700 (supplied by Arkema), which is a reactive random terpolymer of ethylene, butyl acrylate and glycidyl methacrylate (epoxide functional), or Lotader® AX8900 (supplied by Arkema), which is a reactive random terpolymer of ethylene, methyl acrylate and glycidyl methacrylate (epoxide functional), in amounts as mentioned in the table below and processed by injection molding (Arburg, Allrounder 470 E 1000-400, 30 mm screw, Germany).

| Trial | PET grade | Modifier | Impact bars | 2*4 bricks |
|---|---|---|---|---|
| 2-1 | CB-602 | No | X | X |
| 2-2 | CB-602 | 1% (w/w) AX8700 | - | X |
| 2-3 | CB-602 | 2% (w/w) AX8700 | X | X |
| 2-4 | CB-602 | 3% (w/w) AX8700 | - | X |
| 2-5 | CB-602 | 1% (w/w) AX8900 | - | X |
| 2-6 | CB-602 | 3% (w/w) AX8900 | - | X |
| 2-7 | CB-602R | No | X | X |
| 2-8 | CB-602R | 1% (w/w) AX8700 | - | X |

The injection molding processing parameters were as follows:

Melt temperature: 295 degrees C
Hot runner temperature: 300 degrees C
Mould temperature: 20 degrees C

The obtained 2*4 bricks and impact bars were tested in the Drop test and Charpy v-notch test, respectively, as described above. The results are shown in the table below.

| Trial | Charpy v-notch (kJ/m2) | Drop test (2*4 brick) Cm |
|---|---|---|
| 2-1 | 4.0 | 22 |
| 2-2 | - | 36 |
| 2-3 | 4.0 | 38 |
| 2-4 | - | 42 |
| 2-5 | - | 36 |
| 2-6 | - | 40 |
| 2-7 | 4.2 | 40 |
| 2-8 | - | 44 |

The result show that the addition of small amounts of impact modifier does not affect the impact strength when measured using the Charpy v-notch test, whereas a distinct improvement in impact strength is seen when measured using the drop test, i.e. the value of 22 cm is increased to 36 - 40 cm when adding 1, 2 or 3% impact modifier to the bottle grade CB-602.The impact strength measured using the Drop test also show an improvement for the recycled PET grade CB-602R.

This result is similar to the result obtained in Example 1, i.e. it is seen that the Charpy v-notch test is not useful when measuring the impact strength of complex geometries, such as 2*4 bricks, at small amounts of impact modifier.

**Example 3. Modification of different PET grades with various impact modifiers**

The following grades of PET were tested:

- Bottle grade PET CB-602 (supplied by Far Eastern New Century (FENC)) with an IV of 0.80 dl/g
- Commercial grade post-consumer rPET CB-602R (supplied by Far Eastern New Century (FENC)) with an IV of 0.82 dl/g
- Partially bio-based bottle grade PET CB-602AB (supplied by Far Eastern New Century (FENC)) with an IV of 0.77 dl/g. In this grade the MEG monomer is bio-based.
- Homopolymer PET grade 6020 (supplied by Invista) with an IV of 0.66 dl/g

The following grades of impact modifiers were tested:

- Lotader® AX8900 (supplied by Arkema), which is a reactive random terpolymer of ethylene, methyl acrylate and glycidyl methacrylate (epoxide functional)
- Lotader® AX8700 (supplied by Arkema), which is a reactive random terpolymer of ethylene, butyl acrylate and glycidyl methacrylate (epoxide functional)
- Lotader® AX8840 (supplied by Arkema), which is a reactive random copolymer of ethylene and glycidyl methacrylate (epoxide functional)
- Lotader® 4700 (supplied by Arkema), which is a reactive random terpolymer of ethylene, ethyl acrylate and maleic anhydride (anhydride functional)
- Lotader® 3430 (supplied by Arkema), which is a reactive random terpolymer of ethylene, butyl acrylate and maleic anhydride (anhydride functional)
- Metablen® S-2200 (supplied by Mitsubishi Chemical), which is a reactive rubber composed of silicone-acrylate and glycidyl methacrylate (epoxide functional)

PET samples were dried at 150 degrees C to 50-100 ppm moisture content. Upon ambient cooling of the dried PET samples to below 50 degrees C, the samples were dry blended with impact modifier, in amounts as mentioned in the table below and processed via extrusion (Twin screw, Labtech Engineering Company Ltd, Thailand,) followed by injection moulding (Arburg, Allrounder 470 E 1000-400, 30 mm screw, Germany) as described further in example 1 except that the mould used for manufacturing the 2*4 bricks unfortunately broke during the experiments and was therefore substituted. Hence, the bricks produced in trials 3-8 to 3-16 were injection moulded using a different mould than the bricks produced in trials 3-1 and 3-7 as well as in Examples 1 and 2. The first mould (used in Examples 1, 2 and trials 3-1 to 3-7) produces bricks having a certain wall thickness and supporting ribs, whereas the second mould (used in trials 3-8 to 3-16) produces bricks having an increased wall thickness but no supporting ribs. Consequently, the impact strength

of the bricks produced using the first mould cannot directly be compared with the impact strength of the bricks produced using the second mould.

| Trial | PET grade | Modifier | Impact bars | LEGO® 2*4 brick | DUPLO® 2*4 brick |
|---|---|---|---|---|---|
| 3-1 | CB-602 | No | X | - | X |
| 3-2 | CB-602 | 6% (w/w) AX8700 | X | - | X |
| 2-1 | CB-602 | No | X | X | |
| 3-3 | 6020 | No | X | X | - |
| 3-4 | 6020 | 6% (w/w) AX8900 | X | X | - |
| 3-5 | CB-602 | 6% (w/w) AX8900 | X | X | - |
| 3-6 | CB-602 | 20% (w/w) AX8900 | X | X | - |
| 3-7 | CB-602 | 6% (w/w) 4700 | X | X | - |
| 3-8 | CB-602 | No | - | X | - |
| 3-9 | CB-602 | 6% (w/w) 3430 | X | X | - |
| 3-10 | CB-602 | 6% (w/w) AX8840 | X | X | - |
| 3-11 | CB-602 | 6% (w/w) S-2200 | X | X | - |
| 3-12 | CB-602 | 3% (w/w) 3430 + 3% (w/w) AX8900 | X | X | - |
| 3-13 | CB-602R | 6% (w/w) S-2200 | X | X | - |
| 3-14 | CB-602R | 6% (w/w) 3430 | X | X | |
| 3-15 | CB-602AB | No | X | X | - |
| 3-16 | CB-602AB | 6% (w/w) AX8700 | X | X | - |

The obtained 2*4 bricks and impact bars were tested in the Drop test and Charpy v-notch test, respectively, as described above. The results are shown in the table below.

| Trial | Charpy v-notch (kJ/m2) | Drop test (2*4 LEGO@ or DUPLO® brick) Cm |
|---|---|---|
| 3-1 | 4.0 | 32 |
| 3-2 | 6.2 | 42 |
| 2-1 | 4.0 | 22 |
| 3-3 | 3.7 | 18 |
| 3-4 | 5.9 | 50 |
| 3-5 | 6.3 | 54 |
| 3-6 | 10.6 | >90 |
| 3-7 | 5.6 | 42 |
| 3-8 | - | 28 |
| 3-9 | 4.3 | 36 |
| 3-10 | 5.7 | 65 |
| 3-11 | 4.3 | 40 |
| 3-12 | 4.5 | 56 |
| 3-13 | 4.5 | 44 |
| 3-14 | 4.5 | 38 |
| 3-15 | 4.2 | 36 |

(continued)

| Trial | Charpy v-notch (kJ/m2) | Drop test (2*4 LEGO@ or DUPLO® brick) Cm |
|---|---|---|
| 3-16 | 5.8 | 66 |

The above results show that addition of 6% (w/w) of impact modifier slightly improves the impact strength as measured by the Charpy v-notch test and markedly improves the impact strength as measured by the Drop test. The results also show that when further increasing the amount of impact modifier to 20% (w/w) the impact strength is even further improved when measured by the Charpy v-notch test and the Drop test is markedly improved.

The results of Example 3 also show that different grades of PET provides different impact strength and also that the different impact modifiers improves the impact strength to different degrees.

**Summary of test results of Examples 1-3**

In Examples 1-3 the inventors of the present invention have showed that:

- Different grades of PET polyesters can be used for injection moulding of toy building elements, and in particular 2*4 bricks. The different grades include PET homopolymers and copolymers of PET and IPA, partial bio-based PET polyesters, and recycled PET polyesters. The intrinsic viscosity of the tested PET polyesters varies from 0.66 dl/g to 0.82 dl/g.
- Different grades of impact modifiers can be used to improve the impact strength of the injection moulded toy building elements. The different grades include acrylic copolymers, terpolymers of ethylene alkyl acrylate and glycidyl methacrylate, copolymers of ethylene and glycidyl methacrylate, terpolymers of ethylene alkyl acrylate and maleic anhydride, and reactive rubber composed of silicone-acrylate and glycidyl methacrylate.
- The impact strength increases when the concentration of impact modifier is increased from zero to 20% (w/w).
- When small amounts (up to 3% (w/w)) of impact modifier is blended with the PET polyester no increase in impact strength can be detected when using the Charpy v-notch test, whereas an increase in impact strength can be detected when using the Drop test.
- Toy building elements of the size of LEGO@ bricks and the size of LEGO® DUPLO® bricks have been tested and an improved impact strength have been detected for both sizes.

**Claims**

1. A toy building element made of a polymeric polyethylene terephthalate) (PET) material and manufactured by injection moulding of a resin comprising PET polyester, **characterized in that** the resin comprises PET polyester in an amount of at least 50% (wt/wt) relative to the total weight of the resin and an impact modifier, and wherein the toy building element is provided with knobs on the upper side and complementary tubes on the lower side.

2. The toy building element according to claim 1, wherein the PET polyester in the resin is a bio-based polymer, a hybrid bio-based polymer, a petroleum-based polymer or any mixture thereof.

3. The toy building element according to any one of claims 1 or 2, wherein the content of bio-based carbon in the PET polyester is at least 50% based on the total carbon content in the PET polyester.

4. The toy building element according to any one of claims 1 or 2, wherein the content of bio-based carbon in the resin is at least 25% based on the total carbon content in the resin.

5. The toy building element according to any one of the preceding claims, wherein at least part of the PET polyester is recycled PET polyester.

6. The toy building element according to any one of the preceding claims, wherein the PET polyester in the resin is polyethylene terephthalate-co-isophthalate) polyester.

7. The toy building element according to claim 6, wherein the amount of isophthalic acid in the poly(ethylene terephthalate-co-isophthalate) polyester is 0.5-12 mol%, preferably 1-3 mol%.

**8.** The toy building element according to any one of the preceding claims, wherein the intrinsic viscosity of the PET polyester ranges from 0.6-1.1 dl/g, preferably 0.7-0.9 dl/g, more preferably 0.75-0.85 dl/g.

**9.** The toy building element according to claim 8, wherein at least part of the PET polyester in the resin is recycled bottle grade PET.

**10.** The toy building element according to any one of the preceding claims, wherein the impact modifier is a reactive impact modifier.

**11.** The toy building element according to any one of the preceding claims, wherein the amount of impact modifier in the resin is 0.1-30% (wt/wt) based on the total weight of the resin.

**12.** The toy building element according to any one of the preceding claims, wherein the toy building element is made of a polymeric PET material having a degree of crystallinity between 0.5 and 70%.

**13.** A method for the manufacture of a toy building element provided with knobs on the upper side and complementary tubes on the lower side, comprising the steps of

a) providing a resin comprising PET polyester in an amount of at least 50% (wt/wt) relative to the total weight of the resin and an impact modifier, and
b) injection moulding said resin.

**14.** The method according to claim 13, wherein the impact modifier is mixed with the PET polyester during feeding of the injection moulding machine.

**15.** The method according to claim 13, wherein the impact modifier is mixed with the PET polyester prior to feeding the mixture to the injection moulding machine.

## Patentansprüche

**1.** Spielzeugbauelement aus einem polymeren Poly(ethylenterephthalat)- (PET)-Material, das durch Spritzgießen eines Harzes hergestellt wird, das PET-Polyester umfasst, **dadurch gekennzeichnet, dass** das Harz PET-Polyester in einer Menge von mindestens 50% (w/w) relativ zu dem Gesamtgewicht des Harzes und einen Schlagzähmodifizierer umfasst, und wobei das Spielzeugbauelement mit Knöpfen an der oberen Seite und komplementären Röhren an der unteren Seite versehen ist.

**2.** Spielzeugbauelement nach Anspruch 1, wobei der PET-Polyester in dem Harz ein biobasiertes Polymer, ein hybrides biobasiertes Polymer, ein erdölbasiertes Polymer oder ein beliebiges Gemisch davon ist.

**3.** Spielzeugbauelement nach einem der Ansprüche 1 oder 2, wobei der Gehalt an biobasiertem Kohlenstoff in dem PET-Polyester mindestens 50% basierend auf dem Gesamtkohlenstoffgehalt in dem PET-Polyester ist.

**4.** Spielzeugbauelement nach einem der Ansprüche 1 oder 2, wobei der Gehalt an biobasiertem Kohlenstoff in dem Harz mindestens 25% basierend auf dem Gesamtkohlenstoffgehalt in dem Harz ist.

**5.** Spielzeugbauelement nach einem der vorstehenden Ansprüche, wobei mindestens Teil des PET-Polyesters recycelter PET-Polyester ist.

**6.** Spielzeugbauelement nach einem der vorstehenden Ansprüche, wobei der PET-Polyester in dem Harz Poly(ethylenterephthalat-co-isophthalat)-Polyester ist.

**7.** Spielzeugbauelement nach Anspruch 6, wobei die Menge an Isophthalsäure in dem Poly(ethylenterephthalat-co-isophthalat)-Polyester 0,5-12 Mol%, bevorzugt 1-3 Mol% ist.

**8.** Spielzeugbauelement nach einem der vorstehenden Ansprüche, wobei die intrinsische Viskosität des PET-Polyesters von 0,6-1,1 dl/g, bevorzugt 0,7-0,9 dl/g, bevorzugter 0,75-0,85 dl/g reicht.

9. Spielzeugbauelement nach Anspruch 8, wobei mindestens Teil des PET-Polyesters in dem Harz recyceltes PET von Flaschengüte ist.

10. Spielzeugbauelement nach einem der vorstehenden Ansprüche, wobei der Schlagzähmodifizierer ein reaktionsfähiger Schlagzähmodifizierer ist.

11. Spielzeugbauelement nach einem der vorstehenden Ansprüche, wobei die Menge an Schlagzähmodifizierer in dem Harz 0,1-30% (w/w) basierend auf dem Gesamtgewicht des Harzes ist.

12. Spielzeugbauelement nach einem der vorstehenden Ansprüche, wobei das Spielzeugbauelement aus einem polymeren PET-Material mit einem Grad an Kristallinität zwischen 0,5 und 70% hergestellt ist.

13. Verfahren zum Herstellen eines Spielzeugbauelements, das mit Knöpfen an der oberen Seite und komplementären Röhren an der unteren Seite versehen ist, umfassend die folgenden Schritte

a) Vorsehen eines Harzes, das PET-Polyester in einer Menge von mindestens 50% (w/w) relativ zu dem Gesamtgewicht des Harzes und einen Schlagzähmodifizierer umfasst, und
b) Spritzgießen des Harzes.

14. Verfahren nach Anspruch 13, wobei der Schlagzähmodifizierer mit dem PET-Polyester während Einspeisens in die Spritzgussmaschine gemischt wird.

15. Verfahren nach Anspruch 13, wobei der Schlagzähmodifizierer mit dem PET-Polyester vor Einspeisen des Gemisches in die Spritzgussmaschine gemischt wird.

## Revendications

1. Élément de construction de jouet constitué d'un matériau polymère en poly(éthylène téréphtalate) (PET) et fabriqué par moulage par injection d'une résine comprenant du polyester PET, **caractérisé en ce que** la résine comprend du polyester PET en une quantité d'au moins 50 % (en poids) par rapport au poids total de la résine et d'un modificateur d'impact, et dans lequel l'élément de construction de jouet est pourvu de boutons sur la face supérieure et de tubes complémentaires sur la face inférieure.

2. Élément de construction de jouet selon la revendication 1, dans lequel le polyester PET dans la résine est un polymère biosourcé, un polymère biosourcé hybride, un polymère à base de pétrole ou tout mélange de ceux-ci.

3. Élément de construction de jouet selon l'une quelconque des revendications 1 ou 2, dans lequel la teneur en carbone biosourcé dans le polyester PET est d'au moins 50 % sur la base de la teneur totale en carbone dans le polyester PET.

4. Élément de construction de jouet selon l'une quelconque des revendications 1 ou 2, dans lequel la teneur en carbone biosourcé dans la résine est d'au moins 25 % sur la base de la teneur totale en carbone dans la résine.

5. Élément de construction de jouet selon l'une quelconque des revendications précédentes, dans lequel au moins une partie du polyester PET est du polyester PET recyclé.

6. Élément de construction de jouet selon l'une quelconque des revendications précédentes, dans lequel le polyester PET de la résine est un polyester de poly(éthylène téréphtalate-co-isophtalate).

7. Élément de construction de jouet selon la revendication 6, dans lequel la quantité d'acide isophtalique dans le polyester poly(éthylène téréphtalate-co-isophtalate) est de 0,5 à 12 % en moles, de préférence de 1 à 3 % en moles.

8. Élément de construction de jouet selon l'une quelconque des revendications précédentes, dans lequel la viscosité intrinsèque du polyester PET est comprise entre 0,6 et 1,1 dl/g, de préférence entre 0,7 et 0,9 dl/g, plus préférentiellement entre 0,75 et 0,85 dl/g.

9. Élément de construction de jouet selon la revendication 8, dans lequel au moins une partie du polyester PET dans la résine est du PET recyclé de qualité bouteille.

**10.** Élément de construction de jouet selon l'une quelconque des revendications précédentes, dans lequel le modificateur d'impact est un modificateur d'impact réactif.

**11.** Élément de construction de jouet selon l'une quelconque des revendications précédentes, dans lequel la quantité de modificateur d'impact dans la résine est de 0,1 à 30 % (en poids) sur la base du poids total de la résine.

**12.** Élément de construction de jouet selon l'une quelconque des revendications précédentes, dans lequel l'élément de construction de jouet est constitué d'un matériau polymère PET présentant un degré de cristallinité compris entre 0,5 et 70 %.

**13.** Procédé de fabrication d'un élément de construction de jouet pourvu de boutons sur la face supérieure et de tubes complémentaires sur la face inférieure, comprenant les étapes consistant à

a) fournir une résine comprenant du polyester PET dans une proportion d'au moins 50 % (en poids) par rapport au poids total de la résine et d'un modificateur d'impact, et
b) mouler ladite résine par injection.

**14.** Procédé selon la revendication 13, dans lequel le modificateur d'impact est mélangé au polyester PET lors de l'alimentation de la machine de moulage par injection.

**15.** Procédé selon la revendication 13, dans lequel le modificateur d'impact est mélangé au polyester PET avant de fournir le mélange à la machine de moulage par injection.

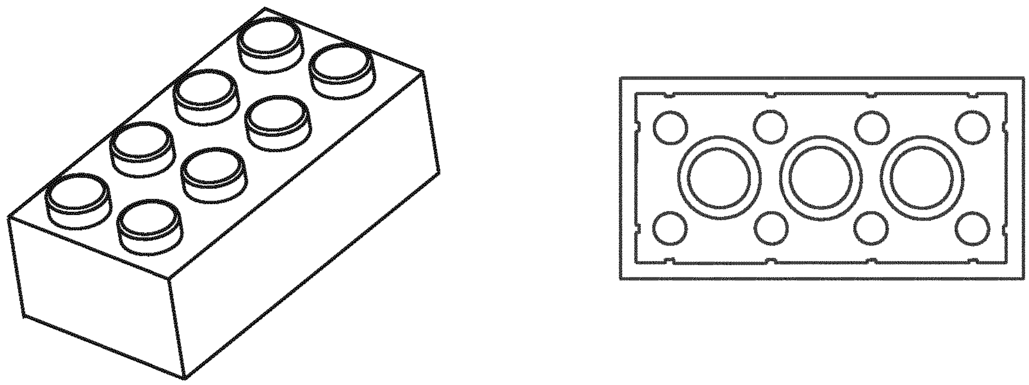

Figure 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3405198 A
- US 4753980 A
- EP 3216718 A1
- US 3005282 A
- US 05877800 A
- US 4616064 A
- WO 2018089573 A
- US 5409967 A


### Non-patent literature cited in the description


- **MARTINEZ DE ILARDUYA, A ; KINT, D. P ; MUÑOZ-GUERRA, S.** Sequence Analysis of Poly (ethylene terephthalate-co-isophthalate) Copolymers by 13C NMR. *Macromolecules,* 2000, vol. 33, 4596-4598
- **KONG, Y ; HAY, J.** The measurement of the crystallinity of polymers by DSC. *Polymer,* 2002, vol. 43, 3873-3878